Europäisches Patentamt

European Patent Office

Office européen des brevets

(11) Publication number: **0 229 715 B1**

# EUROPEAN PATENT SPECIFICATION

(45) Date of publication of patent specification: **06.05.92**   (51) Int. Cl.5: **B32B 27/32**

(21) Application number: **87300286.9**

(22) Date of filing: **14.01.87**

The file contains technical information submitted after the application was filed and not included in this specification

(54) **Multilayered polyolefin high shrinkage low-shrink force shrink film.**

(30) Priority: **17.01.86 US 819603**

(43) Date of publication of application:
**22.07.87 Bulletin 87/30**

(45) Publication of the grant of the patent:
**06.05.92 Bulletin 92/19**

(84) Designated Contracting States:
**BE CH DE FR GB IT LI LU NL SE**

(56) References cited:
**EP-A- 0 032 027**
**DE-A- 2 643 498**
**FR-A- 2 377 948**
**US-A- 4 161 562**
**US-A- 4 194 039**

(73) Proprietor: **E.I. DU PONT DE NEMOURS AND COMPANY**
**1007 Market Street**
**Wilmington Delaware 19898(US)**

(72) Inventor: **Thies, Robert Wayne**
**551 Cabot Drive**
**Hockessin Delaware 19707(US)**

(74) Representative: **Jones, Alan John et al**
**CARPMAELS & RANSFORD 43 Bloomsbury Square**
**London, WC1A 2RA(GB)**

## Description

This invention relates to heat shrinkable, thermoplastic packaging films, to methods for making such films and to packaging materials comprising such films. In particular, it relates to multilayer polyolefin shrink films having high shrinkage and low shrink force.

The polyolefins and polyvinyl chlorides can be considered to be the two major families of plastic resins from which the bulk of commercially available shrink films for wrapping purposes are made. The shrinkable polyolefins currently on the market are mainly monolayer films which include both crosslinked and uncrosslinked oriented polyethylene, oriented polypropylene, and oriented ethylene-propylene copolymers. The polyvinyl chloride (hereinafter "PVC") shrink films are monolayer films consisting of a variety of formulations of polyvinyl chloride.

A shrink film's distinguishing characteristic is its ability upon exposure to some level of heat to shrink or, if restrained, to create shrink tension within the film. This ability is activated by the packager when the wrapped product is passed through a hot air or hot water shrink tunnel. This process causes the film to shrink around the product producing a tight, transparent wrapping that conforms to the contour of the product and which is aesthetically pleasing while providing the useful functions required of packaging materials such as protection of the product from loss of components, pilferage, or damage due to handling and shipment. Typical items wrapped in PVC or polyolefin shrink films are toys, games, sporting goods, stationery, greeting cards, hardware and household products, office supplies and forms, foods, phonograph records, and industrial parts.

The ability of a film to shrink upon exposure to some level of heat arises from the orientation of that film during manufacture. The films are usually heated to their orientation temperature range which varies with the different polymers but is usually above room temperature and below the polymer's melting temperature. The film is then stretched in the cross or transverse direction and in the longitudinal or machine direction to orient it. After being stretched, the film is rapidly cooled to quench it, thus freezing the molecules of the film in their oriented state. Upon heating, the orientation stresses are relaxed and the film will begin to shrink back to its original, unoriented dimension.

The PVC and polyolefin families of shrink films provide a wide range of physical and performance characteristics. Film characteristics play an important role in the selection of a particular film and may differ for each type of packaging application and for each packager. Consideration must be given to the product's size, weight, shape, rigidity, number of product components, other packaging materials which may be used along with the film and the type of packaging equipment available.

Polyolefins have been most successful with applications where moderate to high shrink forces are preferred and on new, automatic, high speed shrink wrapping equipment where shrink and sealing temperature ranges are more clearly controlled. The polyolefins tend to be cleaner leaving fewer deposits and less residue thereby extending the life of the equipment and reducing equipment maintenance. The PVC films generally have better optics, lower shrink forces, and will seal and shrink over much broader temperature ranges than the polyolefins. A drawback to PVC films, however, is their tendency to emit noxious gases upon heat sealing.

Heretofore, polyolefins have not been able to penetrate PVC film packaging applications where the products to be packaged require the lower shrink forces of the PVC film because the products are too fragile for use with polyolefins which possess shrink forces up to four times those of the PVC films. PVC films are also the shrink film of choice for older, manually operated sealers and semi-automatic wrappers where temperatures are highly variable. Older poorly maintained wrapping equipment of any type usually runs PVC better than present monolayer polyolefins due to the combination of the generally broader shrink and sealing temperature ranges of the PVC films.

US-A-4194039 discloses a multi-layer, flexible, heat shrinkable thermoplastic packaging film. This film comprises at least three layers, including a core layer located between the other layers and an auxiliary layer which is stretch oriented. The core layer is a blend of 70-90 percent by weight of homopolymers or copolymers of ethylene (such as polyethylene or ethylene vinyl acetate copolymer) and 30-10 percent by weight of homopolymers or copolymers of butylene. The auxiliary layer comprises homopolymers or copolymers of propylene. The core layer preferably comprises 30-80 percent of the thickness of the film.

FR-A-2377948 discloses a packaging process, comprising heating a laminated film of at least two layers, one or more layers of a low melting point thermoplastic resin and one or more layers of a high melting point resin, to a temperature above the melting point of the low melting resin and below the melting point of the high melting resin. The heated film is wrapped about an article under vacuum and external pressure is applied to orient and deform the film into conformity with the article. The film is cooled below the melting point of the low melting resin to fix the shaped laminate in contact with the article. The low melting resin can be a homopolymer of an alpha olefin, copolymers of alpha olefins with vinyl acetate, esters of acrylic or methacrylic acid, ethylene propylene copolymers, ionomers, or mixtures thereof. The high melting point resin may be polyvinyl chloride, saponification products of ethylene vinyl acetate copolymers, or acrylonitrile copolymers.

Accordingly, it is an object of this invention to provide a shrink polyolefin film that has many of the desirable qualities of PVC films and overcomes the limitations of PVC films.

## SUMMARY OF THE INVENTION

A novel multi-layered, heat shrinkable thermoplastic packaging film has now been found which provides the lower shrink forces and wide shrink temperature ranges usually attributed only to PVC-based products while having the advantages of polyolefin-based products, e.g., cleanliness. Specifically, this invention is directed to a heat shrinkable film comprising:

(a) one or two outer layers of material selected from the group consisting of polyethylene, polypropylene, propylene/ethylene copolymers and blends thereof,

(b) a core layer of material having a melting point below the temperature required to orient the material of the outer layer or layers, said core layer material being selected from the group consisting of ethylene/acid copolymers and related ionomers; ethylene/acid/acrylate terpolymers and related ionomers; blends of any of the above with up to 50% ethylene vinyl acetate; blends of ethylene/ester copolymers with up to 50% ethylene vinyl acetate; and combinations of the above core layer materials, said core layer having a thickness comprising 50 to 95% of the total thickness of the heat-shrinkable film.

Test results indicate that films of this invention have shrink forces low enough to compare with PVC-based films, have a wide range of shrink temperatures and also possess high shrinkage and excellent optical properties. These films can also be more safely and conveniently handled by the end user than PVC films.

## DETAILED DESCRIPTION

The heat shrinkable films of this invention possess at least two layers of thermoplastic material, one layer termed an outer layer and a second layer termed a core layer. The outer layer is, as its name suggests, situated at an outer surface of the film. The core layer may be adjacent to the outer layer and, in the case of a two-layer film, may be situated at the other opposing outer surface of the film. Alternatively, and preferably, the core layer is sandwiched between two outer layers to form a three layer film. As will be discussed in greater detail below, additional polymeric layers may be incorporated in the film to impart improved heat seal characteristics to the basic two- or three-layer film. Other polymeric layers which do not significantly affect the heat shrink characteristics of the film may also be incorporated into the film, e.g., layers of barrier materials.

The core layer constitutes 50 to 95%, and preferably 60 to 90%, of the thickness of the overall film. The properties desired in the core layer are that it have high melt strength (to give high drawability without breakage), high shrinkage, have a melting point below the temperature required to orient the material in the outer layer, and, preferably, provide good optical properties, including low haze, high clarity and high gloss in the final product. Suitable for this purpose are ethylene/acid copolymers and related ionomers, well known in the art to be copolymers of ethylene with an olefinically unsaturated organic acid such as acrylic or methacrylic acid, the acid comprising 0.5 to 50 mole percent of the total polymeric material. The ethylene/acid copolymers and their method of preparation are well known in the art and are disclosed in, for example, U.S. Patents 3,264,272, 3,404,l34, 3,355,3l9 and 4,32l,337, the disclosures of which are hereby incorporated by reference. The copolymers are termed ionomers when the acid is neutralized in whole or in part to produce a salt. The cations of said salts are usually alkali metal, for example zinc. Terpolymers of ethylene, olefinically unsaturated organic acids and an alkyl acrylate or methacrylate termonomer (e.g., n-butyl acrylate or methacrylate or isobutylacrylate or methacrylate), and the corresponding ionomers, are also suitable for use in the core layer. The amount of acrylate termonomer will generally be up to about 15% by weight.

Blends of certain materials are also suitable for use as the core material. In particular, blends of any of the previously mentioned core materials (e.g., ionomers, ethylene/acid copolymers and terpolymers) with up to about 50% ethylene vinyl acetate may be used. Another suitable blend is one of up to 50% ethylene vinyl acetate with an ethylene/ester copolymer, the ester being an olefinically unsaturated ester such as an alkyl acrylate or alkyl methacrylate. The ethylene vinyl acetate used in these blends generally comprises up to 40% vinyl acetate. Finally, the core material may comprise any combination of any of the above-mentioned core materials, either in the form of blends in a single layer or in the form of separate and discrete layers.

The outer layer or layers of the film of this invention comprise materials which can be oriented to provide high shrinkage (e.g. 60% at 120°C), which are oriented at temperatures above the melting point of the core layer, which preferably have good optical properties and a low coefficient of friction. The materials suitable for use in the outer layer are polyethylene (high, medium or linear low density), polypropylene and propylene/ethylene copolymers. The outer layer(s) may also comprise any combination of these materials, either in the form of blends or in the form of separate and discrete layers. When there are two outer layers, they may comprise the same or different materials. These materials may all be oriented by methods known in the art at temperatures (orientation temperatures) generally above 110°C. Slip and anti-block agents which are well known in the art may be added in minor amounts to the material in the outer layer or any layer to reduce its coefficient of friction.

The combined thickness of the outer layers may comprise 5 to 50% of the thickness of the final film. Preferably, however, the combined thickness of the outer layers does not exceed about 15% of the thickness of the final film. When the thickness of the outer layers exceeds 15%, greater stress is required to orient the film, leading to a film with a higher shrink force.

To improve the heat seal strength of the films of this invention, it may be desirable to incorporate additional layers of adhesive resin capable of increasing the adhesion between the outer layer(s) and the core layer. Suitable materials for this adhesive or tie layer would be known to one skilled in the art and include ethylene vinyl acetate copolymers, ethylene/ester copolymers (e.g., copolymers with olefinically unsaturated esters such as alkyl acrylate or alkyl methacrylate), and anhydride grafted polyolefins (as disclosed, e.g., in U.S. 4,230,830, the disclosure of which is hereby incorporated by reference). The ethylene copolymers preferably have a vinyl acetate or ester content in the range of 9 to 25% as higher vinyl acetate and acrylate contents provide the best adhesion to the outer polyolefin layers. Each tie layer will generally comprise about 1 to 10% of the total thickness of the final film.

Certain films of this invention have been found to be preferred because of a combination of properties including low shrink force, high melt strength at orientation, good tensile and tear strengths and excellent optics. These preferred films comprise at least three layers, a core layer sandwiched between two outer layers and, more preferably, comprise five layers in the sequence outer layer/tie layer/core layer/tie layer/outer layer. In the preferred films the core layer comprises 60 to 90% of the total thickness of the film and comprises ionomers and blends of ionomers, the preferred ionomers being copolymers of ethylene and 9 to 18% methacrylic acid neutralized up to about 60%. The preferred films have outer layers comprising 3 to 7% each of the total thickness of the film and comprising propylene/ethylene copolymers containing 1-4% ethylene. The preferred films have tie layers, the preferred materials in these layers being ethylene methylacrylate or ethylene ethylacrylate containing 20-24% acrylate. Specifically preferred embodiments of this invention include the following film structure:

a) two outer layers, each comprising 5% of total thickness of the film, and each comprising a propylene/ethylene copolymer containing 1-4% ethylene

b) a core layer comprising 80% of total thickness of the film and comprising one of the following materials:

i) a copolymer of ethylene and 15% methacrylic acid which has been neutralized 58%;

ii) a copolymer of ethylene and 10% methacrylic acid which has been neutralized 54%;

iii) a copolymer of ethylene and 15% methacrylic acid which has been neutralized 29%;

c) two tie layers, each comprising 5% of the total thickness of the film and each comprising ethylene/methylacrylate copolymer containing 20-24% methylacrylate monomer.

The films of this invention can be prepared by lamination, or extrusion and orientation methods well known in the art. The preferred method for orienting the films is the well-known "bubble" method. In this method, the film is extruded first as a thick-walled tubular tape, cooled below the melting point of each of the layers, optionally subjected to ionizing radiation, then reheated and oriented as a bubble to form the film. Finally, the film is cooled, the bubble is collapsed and wound up. Orientation of the film by this method is in both the transverse and machine directions. The transverse direction stretch is accomplished by blowing air into the tubing, and machine direction stretch is accomplished by rollers which pull the film upwards. To minimize the final shrink force of the film, it is standard technique to minimize the bubble air pressure (pressure of the air blown into the tubing) and maximize the temperature at which the tubing is reheated. It has been found advantageous to orient the preferred films of this invention by the bubble method using bubble air pressure in the range of about .5 to 2" $H_2O$ (125 to 498 Pa) at a maximum temperature of about 135°C to arrive at heat-shrinkable films with low shrink forces. (This figure for bubble air pressure refers to a 4" (10 cm) line blown to a 20" (51 cm) bubble.) Optimal orienting conditions will, of course, vary with the content of the film. The films of this invention may be used to produce any number of packaging materials. Such packaging materials include heat-shrinkable bags, pouches, discrete sheets of film for wrapping articles, and tubes of film.

Films of this invention and their preparation are illustrated in the following examples. The following two methods were used to prepare the films in these examples, Method 1 being the method used unless otherwise indicated. The abbreviation-MD refers to machine direction, and TD refers to transverse direction.

Method 1 - Bubble Method

Samples were made by coextruding the materials through a typical coextrusion die with an annular diameter of 4" (10 cm) and a die gap of 35 mils (889 $\mu$m). The extruded tubing was then passed over an internal quenching mandrel which was maintained at 17°C. A typical rate of extrusion was 4.3 ft/minute (1.3 m/min). The thickness of the quenched tube was 18.3 mils (465 $\mu$m). The tubing was then reheated to a temperature below the melting point of the highest melting component. Simultaneously with reheating, the tubing was stretched in both the MD and TD direction. The TD stretch was accomplished by blowing air into the tubing at a pressure of .5-5 inches of water (125-1246 Pa). This "bubble air" pressure expanded the tubing to a diameter of 20 inches (51 cm). The MD stretch was accomplished by differential speed between the lower nip (4.3 ft./min - 1.3 m/min.) and the top nip (15.4 ft./min - 4.7 m/min). These general conditions produced a 1-mil (25.4 $\mu$m) film which was stretched 3.5 x MD and 5.0 TD.

Method 2 - Stretch Method

This is a two-step process for making a shrink film. The first step is to cast a thick film on a coextrusion film line with two extruders and a three-layer feeding block to combine the two materials into a three-layer film. A five-layer film is prepared by using three extruders and a mixing block that combines the materials into a five-layer film.

In the case of the propylene-ethylene copolymer/ionomer/propylene-ethylene copolymer films, the films were cast at 215°C die temperature from a 12" (30.5 cm) wide film die onto a double chill roll using an S wrap and collected in roll form on a windup stand. The thickness of the individual layers was controlled by varying the appropriate extruder feed rate. The desired film thickness is approximately 18 mils (457.2 $\mu$m). This film thickness provides a 1-mil (25.4 $\mu$m) film after being stretched 4x in both the MD and the TD direction.

The second step is to orient these samples at a temperature below the melting point of the highest melting material in the sample. This biaxial orientation was accomplished on a Long stretcher. Test samples were 4" x 4" (10 x 10 cm) squares which were stretched 4x in both the MD and TD. Typical stretching conditions were at 125°C. After a 2-minute preheat at this temperature, the sample was stretched at 40,000%/minute. The films were then cooled to room temperature while still under restraint.

The following abbreviations and tradenames are used in the examples. All melt indexes refer to g/10 min at 190°C unless otherwise specified.

| | |
|---|---|
| EP | An ethylene/propylene copolymer containing 3-4% polyethylene with a melt index of 3.5 g/10 minute at 230°C. |
| EH | Du Pont Clysar® Shrink Film, blend of high density and low density polyethylene |
| EH806 | Du Pont Clysar® Shrink Film XEH806, linear low density polyethylene |
| 2050 | Dow Linear Low Density Polyethylene 2050 |
| Surlyn® l706 | Du Pont ionomer resin Surlyn® Fl706. This is a copolymer of ethylene and l5% methacrylic acid (MAA) which has been neutralized 58% with Zn ions to a melt index of 0.7. |
| Surlyn® l652 | Du Pont ionomer resin Surlyn® l652. This is a copolymer of ethylene and 9% MAA which has been neutralized l8% with Zn ions to a melt index of 5.0. |
| Surlyn® l856 | Du Pont ionomer resin Surlyn® l856. This is a terpolymer of ethylene, l0% MAA and l0% isobutylacrylate (IBA) which has been neutralized 36% with Na ions to a melt index of l.0. |
| Surlyn® l557 | Du Pont ionomer resin Surlyn® l557. This is a copolymer of ethylene and ll% MAA which has been neutralized 57% with Zn ions to a melt index of 5.0. |
| Surlyn® l855 | Du Pont ionomer resin Surlyn® l855. This is a terpolymer of ethylene, l0% MAA and l0% isobutylacrylate (IBA) which has been neutralized 73% with Zn ions to a melt index of l.0. |

Nucrel® 0903   Du Pont Nucrel® 0903 acid copolymer. This is a copolymer of ethylene and methacrylic acid, 9% acid, with a melt index of 2.5.

Elvax® 3l90   An ethylene vinyl acetate copolymer containing 25% vinyl acetate and having a melt index of 2.0.

Elvax® 3165   An ethylene vinyl acetate copolymer containing 18% vinyl acetate and having a melt index of 0.7.

Elvax® 3130   An ethylene vinyl acetate copolymer containing 12% vinyl acetate and having a melt index of 2.5.

The following standard tests are also referred to in the examples:

Modulus, Tensile Strength, and Elongation:

ASTM D882   Coefficient of Friction: ASTM D1894

Elmendorf Tear (Elm. Tear): ASTM D1922

Haze: ASTM D1003

Clarity: ASTM D1746

Gloss: ASTM D2457

Shrink Force: ASTM D2838

Shrinkage: ASTM D2732

## Example 1

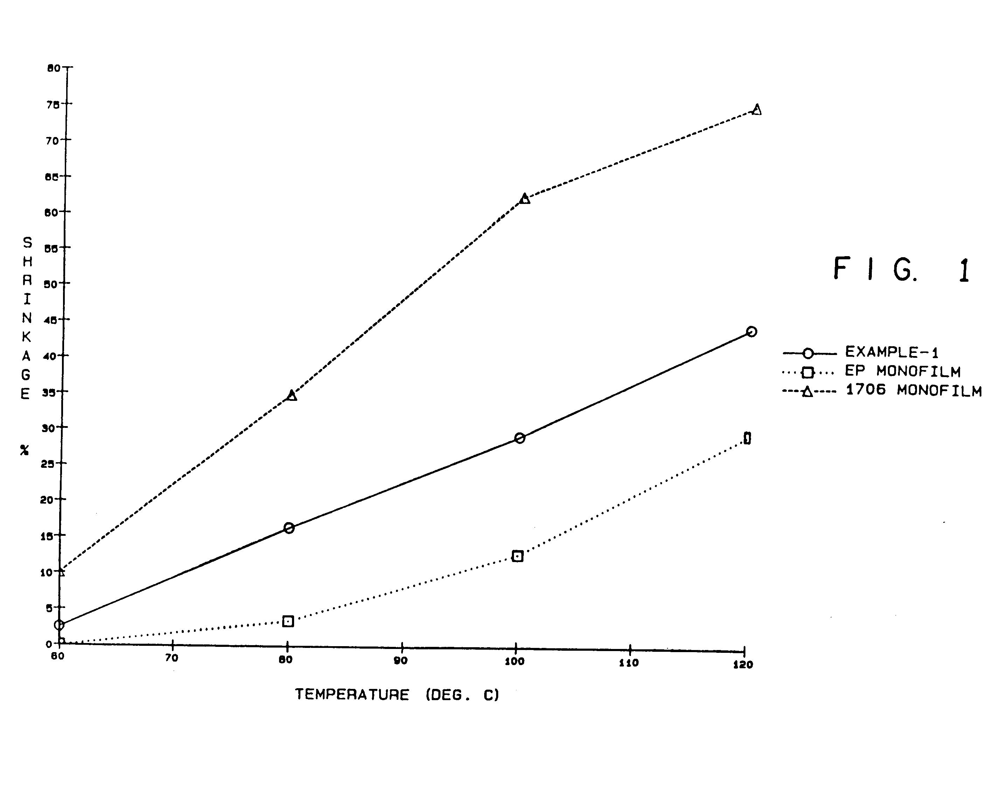

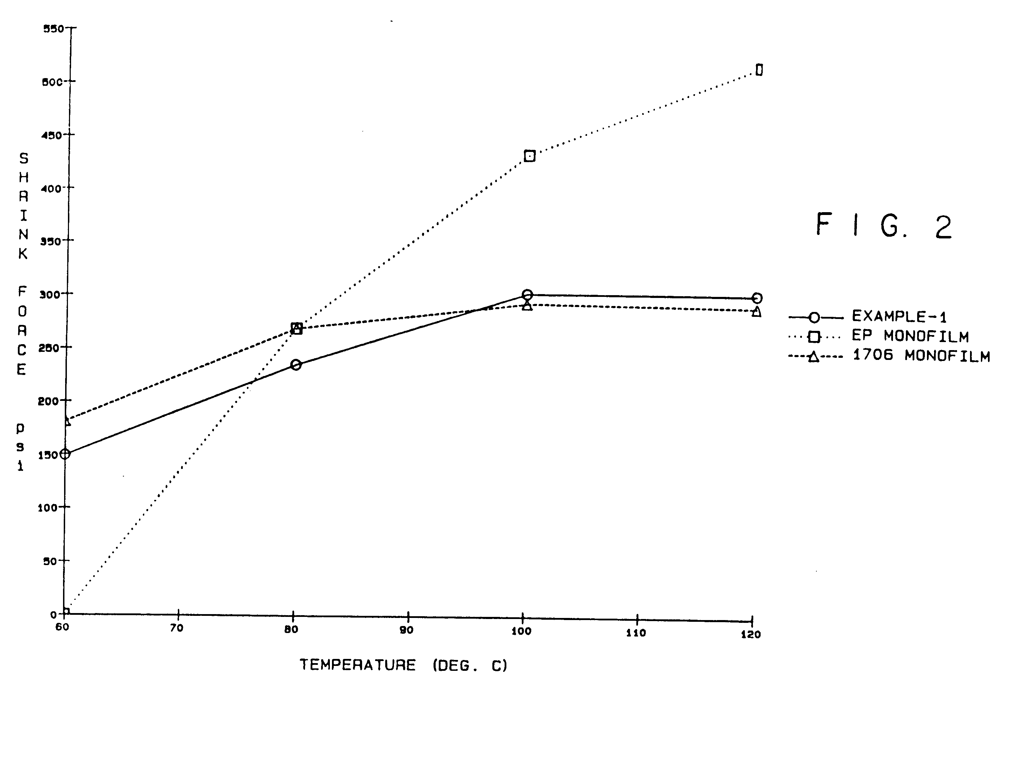

A three layer film made by Method 1 was prepared, the core layer being Surlyn® 1706 ionomer resin and the outer layers being EP. The relative thickness ratios were 1:8:1. A graph of the shrinkage and shrink force data for this three layer film along with data for monofilms made of 100% EP and 100% Surlyn® 1706 resin are found in Figures 1 and 2, respectively. It can be seen that although the percent shrinkage for the three-layer film is between that of EP and Surlyn® 1706 resin, its shrink force is substantially the same as that of Surlyn® 1706 resin.

## Examples 2, 3, 4

In Example 2, a five-layer film was prepared via Method 1. The core layer was Surlyn® 1706 which was bounded on each side by a layer of Elvax® 3190. Bonded to each layer of Elvax® 3190 was a layer of EP. The relative thickness ratios were 1:1:16:1:1. The bubble air pressure was 1" (249 Pa) water.

Examples 3 and 4 are identical to Example 2 except that the bubble air pressure was changed to 3" (747 Pa) and 4.5" (1121 Pa) of water, respectively. The shrinkage and shrink force for these three examples are presented in Table 1. It is apparent from these data that the shrink force can be dramatically changed by the amount of air pressure used to orient the bubble.

Table 1

| SHRINKAGE & SHRINK FORCE DATA FOR EXAMPLES 2, 3, 4 | | | | | | |
|---|---|---|---|---|---|---|
| TEMP °C | EX 2 | EX 3 | EX 4 | EX 2 | EX 3 | EX 4 |
| | % SHRINKAGE | | | SHRINK FORCE in psi (kPa) | | |
| 60 | 2 | 8 | 9 | 108(745) | 181(1247) | 190(1310) |
| 80 | 12 | 19 | 20 | 154(1062) | 219(1510) | 210(1448) |
| 100 | 30 | 41 | 38 | 152(1048) | 238(1641) | 227(1565) |
| 120 | 40 | 48 | 47 | 162(1117) | 271(1869) | 236(1627) |

## Examples 5, 6

These samples are similar to that of Example 1 with changes in the relative layer thicknesses. Example 5 has the relative thickness ratios of 1:18:1 and Example 6 has the relative thickness ratios of 1:3:1. The shrinkage and shrink force data for these two examples and that for Example 1 are in Tables 2A and 2B. Additional data for the three films are in Table 2C.

6

Table 2A

| Shrinkage Data | | | | | |
|---|---|---|---|---|---|
| Example | Thickness of Layers % | % of Shrinkage at: | | | |
| | | 60°C | 80°C | 100°C | 120°C |
| 1 | 10/80/10 | 2.5 | 16.5 | 29.5 | 45 |
| 5 | 5/90/5 | 3.0 | 28.0 | 59.0 | 64 |
| 6 | 20/60/20 | 5.0 | 13.0 | 24.0 | 42 |

Table 2B

| Shrink Force Data | | | | | |
|---|---|---|---|---|---|
| Example | Thickness of Layers % | Shrink Force in psi (kPa) at: | | | |
| | | 60°C | 80°C | 100°C | 120°C |
| 1 | 10/80/10 | 149(1027) | 236(1627) | 305(2103) | 306(2110) |
| 5 | 5/90/5 | 183(1262) | 194(1338) | 263(1813) | 238(1641) |
| 6 | 20/60/20 | 205(1413) | 236(1627) | 317(2186) | 314(2165) |

## Table 2C

| Example | Elm. Tear g/Mil Avg. (g/μm) | Modulus Kpsi Avg. (KPa) | Tensile Strength Kpsi Avg. (KPa) | Elong. % Avg. |
|---|---|---|---|---|
| 1 | 12.5 (0.5) | 60 | $(4.14 \times 10^5)$ 8 | $(5.52 \times 10^4)$ 102 |
| 5 | | 64 | $(4.41 \times 10^5)$ 7.6 | $(5.24 \times 10^4)$ 92 |
| 6 | | 92 | $(6.34 \times 10^5)$ 10.3 | $(7.10 \times 10^4)$ 117 |

| | Haze % | Clarity % | Gloss % | Seal Strength (g/inch) |
|---|---|---|---|---|
| 1 | 1.6 | 75 | 79 | 490 (193 g/cm) |
| 5 | 0.9 | 80 | 127 | |
| 6 | 1.3 | 79 | 143 | |

Examples 7, 8, 9, 10, 11

Examples 7-11 are three-layer films prepared via Method 2. In each case, the outer layers of the film were EP and each example used a different Surlyn® ionomer resin. The samples were stretched at 125°C.

| Example | Core Layer |
|---------|------------|
| 7 | Surlyn® 1706 |
| 8 | Surlyn® 1652 |
| 9 | Surlyn® 1856 |
| 10 | Surlyn® 1557 |
| 11 | Surlyn® 1855 |

The shrinkage and shrink force data are presented in Tables 3A and 3B, respectively. It can be readily seen here that these various ionomer core layers provide similar shrinkage and shrink force properties when processed in the same manner. Their physical properties, however, can vary greatly as can be seen in the summary presented in Table 3C.

Table 3A

| Shrinkage Data | | | |
|----------------|---|---|---|
| Example | % Shrinkage at | | |
| | 80°C | 100°C | 120°C |
| 7 | 2.9 | 8.2 | 19.6 |
| 8 | 3.0 | 8.8 | 23.2 |
| 9 | 3.4 | 23.4 | 31.9 |
| 10 | 3.2 | 8.2 | 20.7 |
| 11 | 3.4 | 19.7 | 33.7 |

Table 3B

| Shrink Force Data | | | |
|-------------------|---|---|---|
| Example | Shrink Force in psi (kPa) at: | | |
| | 80°C | 100°C | 120°C |
| 7 | 55(379) | 60(414) | 65(448) |
| 8 | 29(200) | 50(345) | 70(483) |
| 9 | 29(200) | 51(352) | 67(462) |
| 10 | 36(248) | 48(331) | 53(365) |
| 11 | 31(214) | 50(345) | 56(386) |

Table 3C

| Example | Clarity % | Haze % | Gloss % | Thick Avg. "(mil) (μm) | Modulus Kpsi Avg. (MPa) |
|---|---|---|---|---|---|
| 7 | 1.11 | 76.1 | 0.83 | 1.29400 (33) | 63.745 $(4.40 \times 10^2)$ |
| 8 | 0.89 | 55.2 | 0.53 | 1.08435 (28) | 30.005 $(2.07 \times 10^2)$ |
| 9 | 0.96 | 27.0 | 0.60 | 0.99100 (25) | 17.410 $(1.20 \times 10^2)$ |
| 10 | 0.82 | 43.1 | 0.70 | 0.67100 (17) | 39.760 $(2.74 \times 10^2)$ |
| 11 | 1.07 | 80.3 | 0.84 | 0.95200 (24) | 22.765 $(1.57 \times 10^2)$ |

| Example | Tensile Str. Kpsi Avg (MPa) | Elong % Avg | Elm. Tear Avg g/Mil (g/μm) |
|---|---|---|---|
| 7 | 4.6205 (31.9) | 106.755 | 6.475 (0.25) |
| 8 | 2.6895 (18.5) | 57.445 | 14.320 (0.56) |
| 9 | 3.3995 (23.4) | 178.350 | 20.900 (0.82) |
| 10 | 2.9740 (20.5) | 40.430 | 15.400 (0.61) |
| 11 | 3.9870 (27.5) | 132.050 | 3.650 (0.14) |

Examples 12, 13, 14

Examples 12-14 show the effect of the vinyl acetate content in the ethylene/vinyl acetate tie layer on the heat seal strength of the five-layer compositions. These five-layer films were made using Method 2. The general composition of these films was:

EP : EVA : Surlyn® 1706 : EVA : EP.

The three examples differ only in the vinyl acetate content of the EVA. The heat seal strengths of these samples were measured and compared against a three layer film (Example 7). The results are presented in Table 4.

Table 4

| Example | Elvax® | % VAc | Heat Seal Strength in g/inch (g/cm) |
|---|---|---|---|
| 12 | 3190 | 25 | 1400 (551) |
| 13 | 3165 | 18 | 1250 (492) |
| 14 | 3130 | 12 | 800 (315) |
| 7 | None | 0 | 150 (59) |

Examples 15-25

Examples 15-25 were all prepared using Method 1. They are all three-layer films. The composition of each example, the relative layer thicknesses, and the resulting properties are presented in Tables 5, 6, 7. Table 5 shows the shrink force for each example at 80, 100 and 120°C. Table 6 shows the % shrinkage for each example at 80, 100 and 120°C. Table 7 shows other pertinent information on these examples.

In the tables, the following nomenclature is used.

806 = EH806

1706 = Surlyn®1706

1652 = Surlyn® 1652

0903 = Nucrel® 0903

A composition designation such as 806/l706/806 means a three-layer film having two outer layers of EH806 and a core layer of Surlyn® l706. The designation such as l0/80/l0 under "Layer Thickness" indicates that the two outer layers comprise l0% each of the total thickness of the film and the core layer comprises 80%.

Table 5

| Shrink Force | | | | | |
|---|---|---|---|---|---|
| Example | Composition | Layer Thickness | Shrink Force in psi (KPa) at: | | |
| | | | 80°C | 100°C | 120°C |
| 15 | 806/1706/806 | 10/80/10 | 70.5(486) | 79.0(545) | 63.0(434) |
| 16 | 806/1706/806 | 5/90/5 | 119.0(821) | 149.0(1027) | 123.0(848) |
| 71 | EH/1706/EH | 10/80/10 | 117.0(807) | 118.0(814) | 141.5(976) |
| 18 | EH/1706/EH | 5/90/5 | 144.5(996) | 161.5(1114) | 153.0(1055) |
| 19 | 2050/1706/2050 | 20/60/20 | 243.5(1679) | 287.5(1982) | 264.0(1820) |
| 20 | 2050/1706/2050 | 10/80/10 | 227.5(1569) | 221.0(1524) | 230.5(1589) |
| 21 | EP/1706 + 1652/EP* | 10/80/10 | 95.5(658) | 156.5(1079) | 160.0(1103) |
| 22 | EP/1706 + 1652/EP* | 5/90/5 | 117.0(807) | 121.5(838) | 123.0(848) |
| 23 | EP/0903/EP | 10/80/10 | 144.5(996) | 196.5(1355) | 228.0(1572) |
| 24 | EP/1706 + 0903/EP* | 10/80/10 | 222.5(1534) | 186.0(1282) | 192.5(1327) |
| 25 | EP/1652/EP | 20/60/20 | 165.0(1138) | 194.5(1341) | 279.0(1924) |

*In Examples 21, 22 and 24, the core layer is a 50/50 blend.

Table 6

| % Shrinkage | | | | | |
|---|---|---|---|---|---|
| Example | Composition | Layer Thickness | % Shrinkage at: | | |
| | | | 80°C | 100°C | 120°C |
| 15 | 806/1706/806 | 10/80/10 | 5.0 | 8.0 | 26.5 |
| 16 | 806/1706/806 | 5/90/5 | 13.5 | 33.0 | 52.5 |
| 17 | EH/1706/EH | 10/80/10 | 13.0 | 37.5 | 50.0 |
| 18 | EH/1706/EH | 5/90/5 | 13.0 | 36.5 | 50.0 |
| 19 | 2050/1706/2050 | 20/60/20 | 12.0 | 28.5 | 61.5 |
| 20 | 2050/1706/2050 | 10/80/10 | 21.0 | 41.0 | 61.5 |
| 21 | EP/1706 + 1652/EP | 10/80/10 | 8.0 | 18.5 | 36.5 |
| 22 | EP/1706 + 1652/EP | 5/90/5 | 11.0 | 34.5 | 44.5 |
| 23 | EP/0903/EP | 10/80/10 | 7.0 | 20.0 | 33.0 |
| 24 | EP/1706 + 0903/EP | 10/80/10 | 8.5 | 24.0 | 44.0 |
| 25 | EP/1652/EP | 20/60/20 | 5.0 | 18.5 | 35.5 |

Table 7

| Example | Composition | Layer Thickness | % Haze | % Gloss | % Clarity | Seal Strength g/in.(g/cm) |
|---------|-------------|-----------------|--------|---------|-----------|---------------------------|
| 15 | 806/1706/806 | 10/80/10 | 14.0 | 40 | 56 | 950(374) |
| 16 | 806/1706/806 | 5/90/5 | 2.5 | 42 | 48 | 375(148) |
| 17 | EH/1706/EH | 10/80/10 | 3.0 | 83 | 56 | 350(138) |
| 18 | EH/1706/EH | 5/90/5 | 3.0 | 89 | 45 | 125(49) |
| 19 | 2050/1706/2050 | 20/60/20 | | | | 2200(866) |
| 20 | 2050/1706/2050 | 10/80/10 | | | | 875(344) |
| 21 | EP/1706 + 1652/EP | 10/80/10 | 2.6 | 100 | 70 | 375(148) |
| 22 | EP/1706 + 1652/EP | 5/90/5 | 1.8 | 100 | 73 | 100(39) |
| 23 | EP/0903/EP | 10/80/10 | 1.8 | 71 | 17 | 425(167) |
| 24 | EP/1706 + 0903/EP | 10/80/10 | 2.2 | 100 | 71 | 350(138) |
| 25 | EP/1652/EP | 20/60/20 | 3.5 | 100 | 49 | 1175(463) |

Example 26

Example 26 is a two-layer film prepared via Method 1. The two layers were EP and Surlyn® 1706. The film was coextruded such that the EP was on the inside of the bubble, and the relative layer thicknesses were EP 10%, Surlyn® 1706 90%. The shrinkage and shrink force data are presented in Table 8.

Table 8

| Temperature (°C) | % Shrinkage | Shrink Force in psi (KPa) |
|------------------|-------------|---------------------------|
| 60 | 2.5 | 50(345) |
| 80 | 14 | 105(724) |
| 100 | 31.5 | 120(827) |
| 120 | 47 | 115(793) |

Example 27

The film of Example 1 was stretched again in the machine direction by a Marshall and Williams film stretcher. The film traveled around 45 cm diameter roll maintained at 82°C and then passed over a second heated roll 20 cm in diameter and maintained at 130°C. The tangential linear speed of the first two rolls was 6.1 m/minute. Upon leaving the second roll, the film was stretched 2X by a third roll having a diameter of 20 cm, a tangential speed of 12.2 m/minute and a maintained temperature of 82°C. The film was further quenched by contacting a fourth roll 35 cm in diameter, which was moving at a tangential speed of 11.6 m/minute and a controlled temperature of 40°C.

The resulting film had excellent shrink properties MD but TD shrinkage and shrink force were reduced to approximately 25% of the prestretched sample. The shrinkage and shrink force data are provided in Tables 8A and 8B.

TABLE 8A

| Shrinkage Data | | | |
|----------------|---|---|---|
| Example | % Shrinkage at | | |
| | 80°C | 100°C | 120°C |
| 27-MD | 16 | 37 | 50 |
| 27-TD | 2 | 6 | 21 |

11

TABLE 8B

| Shrink Force Data | | | |
|---|---|---|---|
| Example | Shrink Force psi(KPa) at | | |
| | 80°C | 100°C | 120°C |
| 27-MD | 280(1931) | 360(2482) | 470(3240) |
| 27-TD | 0(0) | 45(310) | 70(483) |

Example 28

A five layer film was prepared by Method 1. The core layer was Surlyn® 1706 which was bonded on each side by a tie layer of ethylene methylacrylate copolymer containing 24% methylacrylate. Bonded to each tie layer was a layer of EP. The relative thicknesses of the layers were 5/5/80/5/5. Data for the film are provided in Table 9.

Table 9

| Physical Properties | |
|---|---|
| | (psi) (KPa) |
| Shrink Force | 165 at 80°C (1138) <br> 158 at 100°C (1089) <br> 147 at 120°C (1014) |
| Shrinkage % | 12 at 80°C <br> 30 at 100°C <br> 41 at 120°C |
| Tensile Strength <br> Elongation <br> Modulus <br> Elmendorf Tear <br> Haze <br> Clarity <br> Gloss | 5.9 Kpsi (40.7 MPa) <br> 120% <br> 67.5 Kpsi (465 MPa) <br> 3.6 g/mil (0.14 g/$\mu$m) <br> 1.2% <br> 66% <br> >100 |

**Claims**

1.  A multi-layer, heat-shrinkable film comprising:
    (a) one or two outer layers of material selected from the group consisting of polyethylene, polypropylene, propylene/ethylene copolymers and blends thereof,
    (b) a core layer of material having a melting point below the temperature required to orient the material of the outer layer or layers, said core layer material being selected from the group consisting of ethylene/acid copolymers and related ionomers; ethylene/acid/acrylate terpolymers and related ionomers; blends of any of the above with up to 50% ethylene vinyl acetate; blends of ethylene/ester copolymers with up to 50% ethylene vinyl acetate; and combinations of the above core layer materials, said core layer having a thickness comprising 50 to 95% of the total thickness of the heat-shrinkable film.

2.  A film of Claim 1 where the or each outer layer is a propylene/ethylene copolymer.

3.  A film of Claim 2 where the propylene/ethylene copolymer contains 1 to 4% ethylene.

**4.** A film of any one of Claims 1 to 3 where the core layer is selected from copolymers of ethylene and acrylic acid or methacrylic acid, and related ionomers; terpolymers of ethylene, acrylic acid or methacrylic acid, and an alkyl acrylate or methacrylate, and corresponding ionomers; blends of up to 50% ethylene vinyl acetate with (i) copolymers of ethylene and acrylic acid or methacrylic acid, or corresponding ionomers; (ii) terpolymers of ethylene, acrylic acid or methacrylic acid, and alkyl acrylate or methacrylate; or corresponding ionomers; (iii) copolymers of ethylene with alkyl acrylate or alkyl methacrylate; or any combination thereof.

**5.** A film of Claim 4 where the core layer is an ionomer or blend of ionomers.

**6.** A film of Claim 5 where the core layer is a copolymer of ethylene and 9 to 18% methacrylic acid neutralized up to 60%.

**7.** A film of Claim 4 where the or each outer layer is a propylene/ethylene copolymer.

**8.** A film of Claim 1 where the or each outer layer is a propylene/ethylene copolymer containing about 1 to 4% ethylene and the core layer is a copolymer of ethylene and 9 to 18% methacrylic acid neutralized up to about 60%.

**9.** The film of any one of Claims 1 to 8 where the core layer comprises 60 to 90% of the total thickness of the film.

**10.** The film of any one of Claims 1 to 9 which has two outer layers.

**11.** The film of any one of Claims 1 to 10 which has a layer of adhesive resin between the or each outer layer and the core layer capable of increasing the adhesion between the outer layer(s) and the core layer.

**12.** The film of Claim 11 where the adhesive resin is selected from ethylene vinyl acetate copolymers, ethylene/ester copolymers and anhydride grafted polyolefins.

**13.** The film of Claim 11 where the adhesive resin is a copolymer of ethylene with methylacrylate.

**14.** The film of Claim 13 where the adhesive resin is a copolymer of ethylene with 20 to 24% methylacrylate.

**15.** The film of any one of Claims 1 to 14 where the core layer is a copolymer of ethylene and 15% methacrylic acid which has been neutralized about 58%.

**16.** The film of any one of Claims 1 to 14 where the core layer is a copolymer of ethylene and about 10% methacrylic acid which has been neutralized about 54%.

**17.** The film of any one of Claims 1 to 14 where the core layer is a copolymer of ethylene and about 15% methacrylic acid which has been neutralized about 29%.

**18.** The film of any one of Claims 11 to 17 where each of the outer layers and each of the layers of adhesive resin comprise about 5% of the total thickness of the film.

**19.** A method of making a heat-shrinkable film of any one of Claims 1 to 18 comprising stretching a multilayer film comprising said one or two outer layers and said core layer at a temperature at or above the orientation temperature of the material in said one or two outer layers but below the melting temperature of said material(s) in said one or two outer layers.

**20.** A packaging material comprising a film according to any one of Claims 1 to 18.

**Revendications**

**1.** Une pellicule thermorétractable multicouche comprenant :

(a) une ou deux couches externes de matière choisie dans le groupe formé par le polyéthylène, le polypropylène, les copolymères propylène/éthylène et les mélanges de ces matières,

(b) une couche centrale de matière présentant un point de fusion inférieur à la température nécessaire pour orienter la matière de la ou des couches externes, ladite matière de couche centrale étant choisie dans le groupe formé par les copolymères éthylène/acide et les ionomères apparentés ; les terpolymères éthylène/acide/acrylate et les ionomères apparentés ; les mélanges de n'importe lesquelles des matières ci-dessus avec jusqu'à 50 % d'éthylène acétate de vinyle ; les mélanges de copolymères éthylène/ester avec jusqu'à 50 % d'éthylène acétate de vinyle ; et les combinaisons des matières de couche centrale ci-dessus, ladite couche centrale ayant une épaisseur représentant 50 à 95 % de l'épaisseur totale de la pellicule thermorétractable.

2. Une pellicule selon la revendication 1 où la ou chaque couche externe est en un copolymère propylène/éthylène.

3. Une pellicule selon la revendication 2 où le copolymère propylène/éthylène contient 1 à 4 % d'éthylène.

4. Une pellicule selon l'une quelconque des revendications 1 à 3 où la couche centrale est choisie parmi les copolymères d'éthylène et d'acide acrylique ou d'acide méthacrylique, et les ionomères apparentés ; les terpolymères d'éthylène, d'acide acrylique ou d'acide méthacrylique, et d'un acrylate ou méthacrylate d'alkyle, et les ionomères correspondants ; les mélanges de jusqu'à 50 % d'éthylène acétate de vinyle avec (i) des copolymères d'éthylène et d'acide acrylique ou d'acide méthacrylique, ou des ionomères correspondants ; (ii) des terpolymères d'éthylène, d'acide acrylique ou méthacrylique, et d'acrylate ou de métacrylate d'alkyle, ou des ionomères correspondants ; (iii) des copolymères d'éthylène et d'acrylate d'alkyle ou de méthacrylate d'alkyle ; ou toute combinaison de ces matières.

5. Une pellicule selon la revendication 4 où la couche centrale est en un ionomère ou un mélange d'ionomères.

6. Une pellicule selon la revendication 5 où la couche centrale est en un copolymère d'éthylène et de 9 à 18 % d'acide méthacrylique neutralisé jusqu'à 60 %.

7. Une pellicule selon la revendication 4 où la ou chaque couche externe est en un copolymère propylène/éthylène.

8. Une pellicule selon la revendication 1 où la ou chaque couche externe est en un copolymère propylène/éthylène contenant environ 1 à 4 % d'éthylène et où la couche centrale est en un copolymère d'éthylène et de 9 à 18 % d'acide méthacrylique neutralisé jusqu'à environ 60 %.

9. La pellicule de l'une quelconque des revendications 1 à 8 où la couche centrale constitue 60 à 90 % de l'épaisseur totale de la pellicule.

10. La pellicule de l'une quelconque des revendications 1 à 9 qui comporte deux couches externes.

11. La pellicule de lune quelconque des revendications 1 à 10 qui comporte, entre la ou chaque couche externe et la couche centrale, une couche de résine adhésive propre à renforcer l'adhérence entre la ou les couches externes et la couche centrale.

12. La pellicule de la revendication 11 où la résine adhésive est choisie parmi les copolymères d'éthylène acétate de vinyle, les copolymères d'éthylène/ester et les polyoléfines greffées par anhydride.

13. La pellicule de la revendication 11 où la résine adhésive est un copolymère d'éthylène et de méthacrylate.

14. La pellicule de la revendication 13 où la résine adhésive est un copolymère d'éthylène avec 20 à 24 % de méthacrylate.

14

**15.** La pellicule de l'une quelconque des revendications 1 à 14 où la couche centrale est en un copolymère d'éthylène et de 15 % d'acide méthacrylique qui a été neutralisé à environ 58 %.

**16.** La pellicule de l'une quelconque des revendications 1 à 14 où la couche centrale est en un copolymère d'éthylène et d'environ 10 % d'acide méthacrylique qui a été neutralisé à environ 54 %.

**17.** La pellicule de l'une quelconque des revendications 1 à 14 où la couche centrale est en un copolymère d'éthylène et d'environ 15 6 d'acide méthacrylique qui a été neutralisé à environ 29 %.

**18.** La pellicule de l'une quelconque des revendications 11 à 17 où chacune des couches externes et chacune des couches de résine adhésive constituent environ 5 % de l'épaisseur totale de la pellicule.

**19.** Un procédé de fabrication d'une pellicule thermorétractable selon l'une quelconque des revendications 1 à 18 comprenant l'étirage d'une pellicule multicouche comprenant la ou lesdites couches externes et ladite couche centrale à une température égale ou supérieure à la température d'orientation de la matière de la ou desdites couches externes mais inférieure à la température de fusion de la ou des matières de la ou desdites couches externes.

**20.** Une matière d'emballage comprenant une pellicule selon l'une quelconque des revendications 1 à 18.

**Patentansprüche**

**1.** Mehrschichtige wärmeschrumpfbare Folie, enthaltend
(a) eine oder zwei äussere Schichten eines Materials, ausgewählt aus der Gruppe bestehend aus Polyethylen, Polypropylen, Propylen/ Ethylen-Copolymere und Gemische davon,
(b) eine Innenschicht eines Materials von einem Schmelzpunkt unterhalb der Temperatur, die notwendig ist, um das Material der äusseren Schicht(en) zu orientieren, wobei das Material der Innenschicht ausgewählt wird aus der Gruppe bestehend aus Ethylen/Säure-Copolymere und verwandte Ionomere; Ethylen/Säure/Acrylat-Terpolymere und verwandte Ionomere; Gemischen davon mit bis zu 50 % Ethylenvinylacetat; Gemischen von Ethylen/Ester-Copolymeren mit bis zu 50 % Ethylenvinylacetat; und Kombinationen des obigen Materials für die Innenschicht, wobei die Innenschicht eine Dicke von 50 % bis 95 % der Gesamtdicke der wärmeschrumpfbaren Folie hat

**2.** Folie nach Anspruch 1, worin die oder jede Aussenschicht ein Propylen/Ethylen-Copolymer ist.

**3.** Folie nach Anspruch 2, worin das Propylen/Ethylen-Copolymer 1 bis 4 % Ethylen enthält.

**4.** Folie nach einem der Ansprüche 1 bis 3, worin die Innenschicht ausgewählt wird aus Copolymeren von Ethylen und Acrylsäure oder Methacrylsäure und verwandten Ionomeren; Terpolymeren von Ethylen, Acrylsäure oder Methacrylsäure, und einem Alkylacrylat oder -methacrylat und entsprechenden Ionomeren; Gemischen von bis zu 50 % Ethylenvinylacetat mit (i) Copolymeren von Ethylen und Acrylsäure oder Methacrylsäure, oder entsprechenden Ionomeren; (ii) Terpolymeren von Ethylen, Acrylsäure oder Methacrylsäure, und Alkylacrylat oder -methacrylat; oder entsprechenden Ionomeren; (iii) Copolymeren von Ethylen mit Alkylacrylat oder Alkylmethacrylat; oder Kombinationen davon.

**5.** Folie nach Anspruch 4, worin die Innenschicht ein Ionomer oder ein Gemisch von Ionomeren ist.

**6.** Folie nach Anspruch 5, worin die Innenschicht ein Copolymer von Ethylen und 9 bis 18 % Methacrylsäure, neutralisiert bis 60 %, ist.

**7.** Folie nach Anspruch 4, worin die oder jede Aussenschicht ein Propylen/Ethylen-Copolymer ist.

**8.** Folie nach Anspruch 1, worin die oder jede Aussenschicht ein Propylen/Ethylen-Copolymer mit etwa 1 bis 4 % Ethylen und die Innenschicht ein Copolymer von Ethylen und 9 bis 18 % Methacrylsäure, neutralisiert bis zu etwa 60 %, ist.

**9.** Folie nach einem der Ansprüche 1 bis 8, worin die Innenschicht 60 bis 90 % der Gesamtdicke der Folie ausmacht.

**10.** Folie nach einem der Ansprüche 1 bis 9, welche zwei Aussenschichten hat.

**11.** Folie nach einem der Ansprüche 1 bis 10, welche eine Schicht von klebendem Harz zwischen der oder jeder Aussenschicht und der Innenschicht hat, die in der Lage ist, die Adhäsion zwischen der äusseren Schicht (den Schichten) und der Innenschicht zu erhöhen.

**12.** Folie nach Anspruch 11, worin das Klebeharz ausgewählt wird aus Ethylenvinylacetat-Copolymeren, Ethylen/Ester-Copolymeren und anhydridgepfropften Polyolefinen.

**13.** Folie nach Anspruch 11, worin das Klebeharz ein Copolymer von Ethylen mit Methacrylat ist.

**14.** Folie nach Anspruch 13, worin das Klebeharz ein Copolymer von Ethylen mit 20 bis 24 % Methacrylat ist.

**15.** Folie nach einem der Ansprüche 1 bis 14, worin die Innenschicht ein Copolymer von Ethylen und 15 % Methacrylsäure ist, die zu etwa 58 % neutralisiert ist.

**16.** Folie nach einem der Ansprüche 1 bis 14, worin die Innenschicht ein Copolymer von Ethylen und etwa 10 % Methacrylsäure ist, die zu etwa 54 % neutralisiert ist.

**17.** Folie nach einem der Ansprüche 1 bis 14, worin die Innenschicht ein Copolymer von Ethylen und etwa 15 % Methacrylsäure ist, die zu etwa 29 % neutralisiert ist.

**18.** Folie nach einem der Ansprüche 11 bis 17, worin jede der Aussenschichten und jede der Schichten von Klebeharz etwa 5 % der Gesamtdicke der Folie ausmachen.

**19.** Verfahren zur Herstellung einer wärmeschrumpfbaren Folie von einem der Ansprüche 1 bis 18, bei dem man eine mehrschichtige Folie, die eine oder zwei Aussenschichten und eine Innenschicht enthält, bei einer Temperatur bei oder oderhalb der Orientierungstemperatur des Materials in einer oder zwei Aussenschichten, aber unterhalb des Schmelzpunktes dieser Materialien in einer oder beiden Aussenschichten verstreckt.

**20.** Verpackungsmaterial, enthaltend eine Folie gemäss einem der Ansprüche 1 bis 18.

FIG. 1

F I G. 2

EXAMPLE-1
EP MONOFILM
1706 MONOFILM